# EUROPÄISCHE PATENTANMELDUNG

(11) **EP 2 502 601 A2**
(43) Veröffentlichungstag der Anmeldung: **26.09.2012**
(21) Anmeldenummer: 12160533.1
(22) Anmeldetag: 21.03.2012
(51) Int. Cl.: A61C 13/00

(54) **Verfahren zur Herstellung von Zahnersatzteilen**

(30) Priorität: 21.03.2011 DE 102011005872
(71) Anmelder: Kaltenbach & Voigt GmbH, 88400 Biberach (DE)
(72) Erfinder: Bagus, Thomas, 88400 Biberach (DE)
(74) Vertreter: Thun, Clemens

(57) **Zusammenfassung**

Verfahren zur Herstellung und Weiterverarbeitung von Zahnersatzteilen, bei dem eine Gerüststruktur für ein Zahnersatzteil gefertigt wird, wobei die gefertigte Gerüststruktur mit einem Verblendwerkstoff aufgefüllt wird und dann der Verblendwerkstoff entsprechend bearbeitet wird, wobei die Bearbeitung auf der gleichen Positionierung der Gerüststruktur erfolgt.

## Beschreibung

Die vorliegende Erfindung betrifft ein Verfahren zur Herstellung und eines Zahnersatzteils, bei dem in einem ersten Schritt eine Gerüststruktur für das Zahnersatzteil gefertigt wird.

Bisher wurden temporärer Zahnersatz und Langzeitprovisorien vom Zahnarzt oder Zahntechniker hergestellt, die meist aus einem einzigen Werkstoff bestanden und aufgrund der Eigenschaften dieses Werkstoffs für eine längere Tragezeit nicht geeignet waren.

Weltweit vollzieht sich in der Zahnmedizin bei Zahnersatz mittlerweile jedoch ein rasanter globaler Wandel hin zu günstigen Alternativen, die natürlich wirken und ästhetisch aussehen. Davon nicht ausgenommen sind auch die implantatische Versorgung, insbesondere temporäre Hilfsmittel wie z.B. Brakes und Provisorien.

Speziell auf diese Anforderungen (Stabilität, Ästhetik und Patientenverträglichkeit) ausgerichtet sind Käppchen, Gerüste und sog. Abutments sowie die dazu erforderlichen Verblendwerkstoffe entwickelt worden. Parallel dazu etablierte sich eine dentale CAD-CAM Technologie und ermöglicht die maschinelle Fertigung von Strukturen aus Halbzeugen mit einer bisher nicht erreichten Präzision aus verschiedenen dentalen Grund- und Hilfs-Werkstoffen.

Diese Entwicklungen der Materialien in Verbindung mit der dentalen CAD-CAM Technologie führen nun zu einer umfassenden Erweiterung des Einsatzes temporärer und in Langzeit getragener Restaurationen. Dies ist unter anderem auch bedingt durch die besonders hervorragenden Werkstoffeigenschaften der weiterentwickelten Werkstoffe.

Aus dem Stand der Technik ist beispielsweise ein Verfahren bekannt, bei dem zwei separat gefertigte und aus verschiedenen Materialien bestehende Gerüste, ein

Grundgerüst und ein Gerüst, das zur Verblendung dient, durch Kleben zusammengefügt werden.

Eine andere Möglichkeit besteht darin, eine Gerüstfertigung mit Hilfe der CAD-CAM-Technologie durchzuführen und anschließend dieses Gerüst manuell zu Verblenden. Hierbei wird der Verblendwerkstoff manuell, insbesondere schichtweise auf das Gerüst aufgetragen, bis die gewünschte Endstruktur erhalten wird. Ebenso ist auch eine rein manuelle Fertigung des Zahnersatzes im zahntechnischen Labor bekannt, bei der sowohl die Herstellung eines Gerüsts als auch das anschließende Verblenden manuell erfolgt.

Der vorliegenden Erfindung liegt die Aufgabe zugrunde, ein Verfahren zur Herstellung und Weiterverarbeitung von Zahnersatzteilen zu entwickeln, das eine einfache und genaue Herstellung und Weiterverarbeitung von Zahnersatzteilen ermöglicht, die aus mindestens zwei Materialen bestehen.

Die Aufgabe wird durch ein Verfahren zur Herstellung und Weiterverarbeitung von Zahnersatzteilen gemäß Anspruch 1 gelöst. Vorteilhafte Weiterbildungen der Erfindung sind Gegenstand der abhängigen Ansprüche.

Ziel der Erfindung ist es, die Materialeigenschaften von unterschiedlichen Materialien bestmöglich zu nutzen und zu verbinden. Dazu werden ein oder mehrere Konstruktionsdatensätze auf einer oder mehreren Fertigungsmaschinen auf der identischen Position nacheinander gefertigt. Während des Fertigungsprozesses werden das zu bearbeitende Material oder die Materialeigenschaften verändert.

Erfindungsgemäß wird also ein Verfahren zur Herstellung eines Zahnersatzteils, welches aus einer Gerüststruktur und einem zumindest auf Teilbereichen der Gerüststruktur befindlichen Verblendwerkstoff besteht, vorgeschlagen, wobei in einem ersten Schritt die Gerüststruktur gefertigt wird, die gefertigte Gerüststruktur mit dem Verblendwerkstoff aufgefüllt oder zumindest teilweise überdeckt wird und anschließend der Verblendwerkstoff entsprechend bearbeitet wird, wobei die Bearbeitung auf der gleichen Positionierung der Gerüststruktur erfolgt. Vorteilhafterweise kann vorgesehen sein, dass die Gerüststruktur mit einem sog. Opaker abgedeckt wird bevor der Verblendwerkstoff aufgefüllt wird.

Die Gerüststruktur wird vorzugsweise durch abtragendes Bearbeiten eines Materialblocks, insbesondere durch Fräsen und/oder Schleifen eines Keramikblocks, eines vorgesinterten Keramikblocks oder eines Keramikgrünlings erhalten, wobei das Bearbeiten des Materialblocks mit Hilfe einer Fräsmaschine erfolgen kann und auch der Verblendwerkstoff mit Hilfe der Fräsmaschine bearbeitet wird. Dabei kann vorgesehen sein, dass der Verblendwerkstoff lediglich im Bereich der Okklusalfläche des Zahnersatzteils aufgebracht wird.

Ferner kann vorgesehen sein, dass der Materialblock während der Bearbeitung mittels eines Einbettmaterials in einer Werkzeughalterung gehalten wird, wobei der später aufgetragene Verblendwerkstoff zumindest teilweise auch der Halterung des Materialblocks dient.

Durch das erfindungsgemäße Verfahren wird eine deutliche Erleichterung und Zeitersparnis in der Fertigung von zahnärztlichen und zahntechnischen Restaurationen erreicht. Ferner kann die Qualität der gefertigten Teile im Vergleich zu bisherigen Verfahren, wie sie aus dem Stand der Technik bekannt sind, nochmals deutlich verbessert werden.

Die höhere Qualität der nach dem erfindungsgemäßen Verfahren hergestellten Zahnersatzteile ist u.a. darauf zurückzuführen, dass sich durch das Verbinden zweier Materialien in einem Fertigungsprozess eine homogene Verbindung dieser zwei Materialien mit einer dementsprechend höheren Stabilität ergibt, weshalb keine Klebung zwischen Gerüst und Verblendwerkstoff nötig ist. Außerdem ist keine manuelle Nacharbeit mehr erforderlich, da die Zahnersatzteile nunmehr rein maschinell gefertigt werden können. Auch dies stellt einen gravierenden Vorteil dar, da das nachträgliche manuelle Bearbeiten immer die Gefahr einer Beschädigung des Zahnersatzteils mit sich bringt. Selbst kleine und bei manueller Bearbeitung im Patientenmund kaum zu vermeidende Mikrorisse können hierbei zu einer deutlichen Beeinträchtigung der Funktionalität des Zahnersatzteils führen, wobei eine derartige Gefahr bei dem erfindungsgemäßen Verfahren nicht mehr besteht.

Nachfolgend wird die Erfindung anhand von Ausführungsbeispielen sowie der beiliegenden Zeichnung näher erläutert. Dabei zeigen:
- Figuren 1 bis 5: Schritte einer ersten erfindungsgemäßen Variante zur Herstellung eines Zahnersatzteils in sog. Rondenfertigung; und
- Figuren 6 bis 12: Schritte einer zweiten erfindungsgemäßen Variante zur Herstellung eines Zahnersatzteils im sog. Umbettverfahren.

Das erfindungsgemäße Verfahren bezieht sich sowohl auf die sogenannte Einzelblankals auch auf die Rondenfertigung mit Hilfe einer CAD-CAM Fertigungsmaschine (Blank, Ronde = Materialblöcke), wobei beide Varianten bereits grundsätzlich bekannt sind und gemäß der vorliegenden Erfindung derart modifiziert werden, dass aus unterschiedlichen Materialen bestehende Zahnersatzteile gefertigt werden.

Bei der Einzelblankfertigung bzw. dem Einzelblankverfahren kann zwischen dem Einzelblankverfahren im Umbettverfahren und dem Einzelblankverfahren mit Halter unterschieden werden, wobei bei dem Einzelblankverfahren mit Halter, wie auch bei der Rondenfertigung bzw. dem Rondenfertigungsverfahren, das Zahnersatzteil durch sogenannte Stege (Haltestifte) am ursprünglichen Materialblock, dem Blank bzw. der Ronde angebracht bzw. verbunden ist. Beim Einzelblankverfahren im Umbettverfahren hingegen müssen nach der Hälfte des Fertigungsprozesses der Blank und die Werkstückaufnahme mit einem Füllstoff aufgefüllt werden, ansonsten würde der Rohling (Blank) aus der Halterung bzw. Werkstückaufnahme fallen. Dieses Einzelblankverfahren im Umbettverfahren ist beispielsweise im Detail in der WO 00/62705 beschrieben, wobei dort das gefertigte Zahnersatzteil lediglich aus einem Material besteht, beispielsweise Keramik. In der WO 00/62705 ist als Füllstoff zur Halterung des Rohlings in der Werkstückaufnahme unter anderem Wachs vorgesehen, dass nach Beendigung des Fertigungsprozesses durch Erwärmen entfernt wird.

Im Gegensatz hierzu werden bei dem erfindungsgemäßen Verfahren anstelle des Füllstoffs nun Verblendkunststoffe oder andere zahntechnische Verblendwerkstoffe verwendet.

Im Einzelnen wird beispielsweise bei dem erfindungsgemäßen Verfahren im Zusammenhang mit der Einzelblankfertigung mit Umbettverfahren nach der Fertigung der Kavität oder Okklusion der CAD-Gerüstdaten die Kavität oder Okklusion mit ölfreier Druckluft getrocknet und gereinigt bzw. abgestrahlt. Anschließend werden zur Weiterverarbeitung die Gerüstflächen bzw. Gerüststruktur wenn gewünscht mit Opaker abgedeckt und mit beispielsweise zahnfarbenen Verblendkunststoffen oder - werkstoffen aufgefüllt, wodurch ein Gegenbetten erfolgt und somit ein Umbetten ermöglicht wird. Danach wird der Datensatz der morphologischen Kavitätsflächen auf der gleichen Positionierung der Gerüstflächen bzw. Gerüststruktur gefertigt. Im Anschluss daran wird nach der Fertigung der Kavität oder Okklusion der CAD-Gerüstdaten die Kavität oder Okklusion mit ölfreier Druckluft getrocknet und gereinigt bzw. abgestrahlt. Als nächster Schritt wird der Datensatz der morphologischen Okklusalflächen auf der gleichen Positionierung der Gerüstflächen gefertigt.

Im Gegensatz zum aus der WO 00/62705 bekannten reinen Einzelblankverfahren im Umbettverfahren wird im erfindungsgemäßen Verfahren im Zusammenhang mit der Einzelblankfertigung mit Umbettverfahren der Füllwerkstoff bzw. Verblendwerkstoff nur bis zur Gerüstform abgetragen.

Zu dem erfindungsgemäßen Verfahren im Zusammenhang mit der Einzelblankfertigung mit Umbettverfahren ist noch anzumerken, dass nach dem Auffüllen mit Verblendkunststoff sich die Kavität auch mit Kunststoff auffüllt, den man später im zweiten Fräsen wieder entfernt.

Bei dem erfindungsgemäßen Verfahren im Zusammenhang mit der Einzelblankfertigung mit Halter bzw. Rondenfertigung werden beispielsweise wiederum nach der Fertigung der Kavität und Okklusion der CAD-Gerüstdaten der Blank bzw. die Ronde, die Kavität und die Okklusion mit ölfreier Druckluft getrocknet und gereinigt bzw. abgestrahlt. Anschließend werden zur Weiterverarbeitung die Gerüstflächen bzw. Gerüststruktur wenn gewünscht mit Opaker abgedeckt und mit beispielsweise zahnfarbenen Verblendkunststoffen oder -werkstoffen aufgefüllt. Nach der Fertigung der Gerüstdaten der Kavität schlägt die Spannbrücke automatisch um, wodurch der Blank bzw. die Ronde gedreht wird, und die Okklusion wird gefertigt. Im Anschluss daran werden der Blank bzw. die Ronde, die Kavität und die Okklusion mit ölfreier Druckluft getrocknet und gereinigt bzw. abgestrahlt. Als nächster Schritt werden zur Weiterverarbeitung die Gerüstflächen bzw. Gerüststruktur wenn gewünscht mit Opaker abgedeckt und mit beispielsweise zahnfarbenen Verblendkunststoffen oder -werkstoffen aufgefüllt. Anschließend wird der Datensatz der morphologischen Außenflächen auf der gleichen Positionierung der Gerüstflächen bzw. Gerüststruktur gefertigt. Dieser Prozess kann auch mehrmals wiederholt werden.

Somit entfällt bei dem erfindungsgemäßen Verfahren im Zusammenhang mit der Einzelblankfertigung mit Halter bzw. Rondenfertigung ein zweites Fräsen der Okklusion und Kavität (Ober und Unterseite). Zudem wird die Kavität (Unterseite) nach der Okklusion gefertigt und läuft somit nicht mit Verblendkunststoff bzw. - werkstoff voll.

Insgesamt ist also das erfindungsgemäße Verfahren im Zusammenhang mit der Einzelblankfertigung mit Umbettverfahren etwas aufwendiger, da doppelt gefertigt werden muss, wohingegen bei dem erfindungsgemäßen Verfahren im Zusammenhang mit der Einzelblankfertigung mit Halter bzw. Rondenfertigung nur ein Fertigungsprozess pro Seite nötig ist.

In Tabelle 1 wird noch einmal das erfindungsgemäße Verfahren im Zusammenhang mit der Einzelblankfertigung mit Umbettverfahren und das erfindungsgemäße Verfahren im Zusammenhang mit der Einzelblankfertigung mit Halter bzw. Rondenfertigung einander gegenüber gestellt.

**Tabelle 1**

| **erfindungsgemäße Verfahren im Zusammenhang mit der Einzelblankfertigung mit Halter bzw. Rondenfertigung** | **erfindungsgemäße Verfahren im Zusammenhang mit der Einzelblankfertigung mit Umbettverfahren** |
|---|---|
| Gerüstkonstruktion (A) | Gerüstkonstruktion (A) |
| Gerüstkonstruktion (B) | Gerüstkonstruktion (B) |
| | Einbetten vom Blank |
| Gerüstfertigung (A) | Gerüstfertigung (A) Kavität/Okklusion |
| Reinigung der Gerüststruktur mittels Luft und Flüssigkeit | Reinigung der Gerüststruktur mittels Luft und Flüssigkeit |
| Nach Wunsch abdecken der Gerüstoberflächen (Opaker) | Nach Wunsch abdecken der Gerüstoberflächen (Opaker) |
| Auffüllen der Gerüststruktur mit Verblendmaterialien | Gegenbetten der Gerüststruktur mit Verblendmaterialien |
| Fertigung der okklusalen Gerüststruktur (B) | Fertigung der okklusalen Gerüststruktur (B) |
| | Wahlweise Kavität oder Okklusion |
| Zur Weiterverarbeitung Halter entfernen, aufpassen und polieren | Gerüst entnehmen, aufpassen und polieren |

Zur besseren Verdeutlichung der erfindungsgemäßen Lösung werden nachfolgend zwei Varianten des erfindungsgemäßen Verfahrens dargestellt.

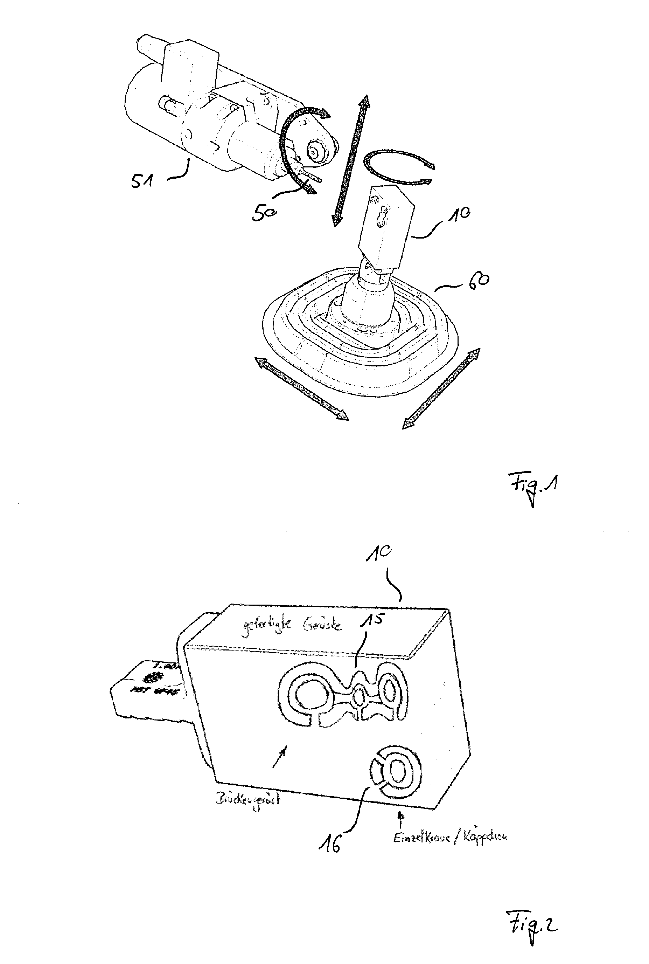

Dabei ist in den Figuren 1 bis 5 zunächst das erfindungsgemäße Verfahren im Zusammenhang mit der oben erwähnten Einzelblankfertigung mit Halter bzw. Rondenfertigung gezeigt. Hierbei erfolgt - wie in Figur 1 gezeigt - die Bearbeitung eines Materialblocks 10, des sogenannte Blanks, mithilfe eines Fräswerkzeugs 50. Die in Figur 1 dargestellten Pfeile verdeutlichen hierbei die Bewegungsmöglichkeiten einerseits der Halterung 60 für den Materialblock 10 sowie der Halterung der Fräsmaschine 51. Es ist erkennbar, dass im Wesentlichen alle erforderlichen Freiheitsgrade zur Verfügung stehen, um den Materialblock 10 in beliebiger Weise bearbeiten zu können.

Bislang war es bekannt, den Materialblock 10 derart zu bearbeiten, dass letztendlich einzelne Werkstücke ausgearbeitet wurden, welche dem gewünschten Zahnersatz entsprachen. Diese waren lediglich über kleine Stege mit dem restlichen Bereich des Materialblocks 10 verbunden und wurden anschließend durch Trennen der Stege herausgelöst und abschließend bearbeitet, z.B. poliert. Bei dieser bisherigen Vorgehensweise bestand dann allerdings der auf diese Weise hergestellte Zahnersatz lediglich aus einem einzigen Material. Sollte der Zahnersatz hingegen mit einem weiteren Material verblendet sein, so wurde aus dem Materialblock 10 lediglich die Gerüststruktur ausgearbeitet und diese dann anschließend manuell verblendet.

Bei dem erfindungsgemäßen Verfahren ist demgegenüber vorgesehen, dass in einem ersten, in Figur 2 dargestellten Schritt der Materialblock 10 zunächst derart bearbeitet wird, dass die Gerüste bzw. Gerüststrukturen 15 und 16 ausgearbeitet werden. Dargestellt im vorliegenden Fall ist einerseits die Gerüststruktur 15 für eine Brücke, während hingegen mit dem Bezugszeichen 16 die Gerüststruktur für eine Einzelkrone oder ein sogenanntes Käppchen gezeigt ist. In diesem Fall wird also der Materialblock 10 zunächst soweit abtragend bearbeitet, dass die Gerüststruktur des späteren Zahnersatzteils bzw. der Zahnersatzteile verbleibt.

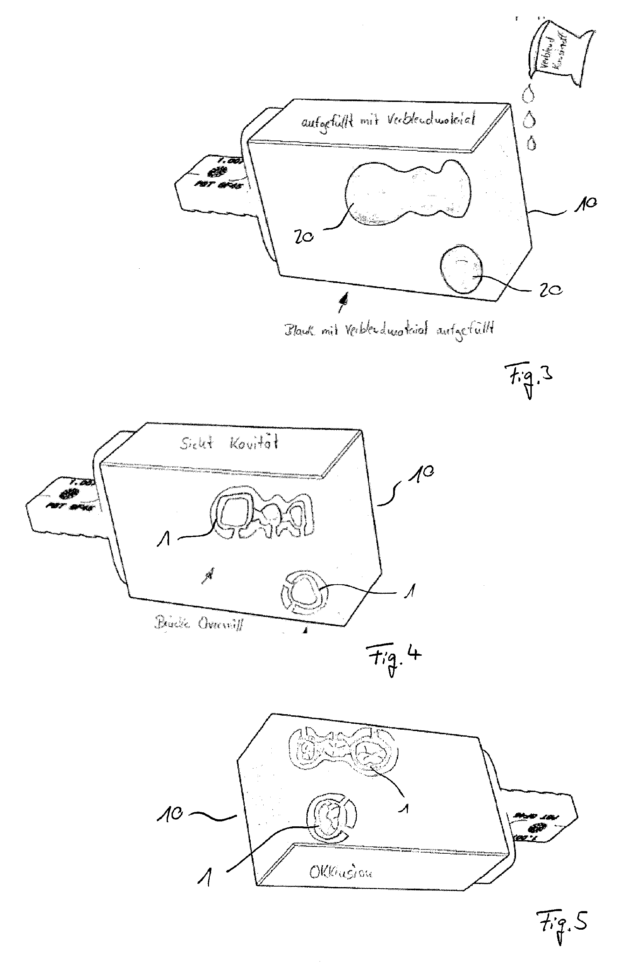

In einem weiteren Schritt, der in Figur 3 gezeigt ist, werden dann die auf diese Weise gebildeten Ausnehmungen bzw. Freiräume in dem Materialblock 10 wieder mit Füllmaterial aufgefüllt, wobei es sich bei diesem Füllmaterial 20 um den Verblendwerkstoff 20 handelt. Vereinfacht gesagt wird also das in dem ersten Bearbeitungszyklus abgetragene Material des Materialblocks 10 durch den Verblendwerkstoff ersetzt, so dass sich wiederum im Wesentlichen ein geschlossene, quaderförmiger Block ergibt, der nunmehr allerdings zumindest teilweise aus dem Verblendwerkstoff 20 besteht.

In dem darauffolgenden Schritt wird nunmehr dieser Verblendwerkstoff 20 abtragend bearbeitet, bis letztendlich die in den Figuren 4 und 5 dargestellte Form erhalten wird. Wiederum verbleiben die endgültigen Zahnersatzteile 1 derart in dem Materialblock 10, dass sie nur noch über Stege mit dem restlichen Material verbunden sind. Erkennbar ist allerdings insbesondere in Figur 5, welche die Okklusionsfläche der Zahnersatzteile 1 zeigt, dass der Verblendwerkstoff 20 derart bearbeitet wurde, dass dessen Außenfläche der Oberfläche des letztendlich gewünschten Zahnersatzteils 1 entspricht. Es wurde also tatsächlich ein Zahnersatzteil 1 gebildet, dessen Gerüststruktur aus dem ersten Material, nämlich dem Material des ursprünglichen Materialblocks 10 besteht, wobei das Gerüst dann mit dem Verblendwerkstoff überlagert ist, dessen Außenform der endgültigen Struktur des gewünschten Zahnersatzes 1 entspricht.

Der Vorteil des beschriebenen Verfahrens besteht wie bereits erwähnt darin, dass die Bearbeitung beider Materialien grundsätzlich durch die gleiche Maschine durchgeführt werden kann und nach Auffüllen des Verblendwerkstoffs lediglich abgewartet werden muss, bis dieses derart erhärtet ist, dass es wiederum mit dem Fräswerkzeug 50 bearbeitet werden kann. Aufgrund der Tatsache allerdings, dass die Bearbeitung auf der identischen Halterung 60 sowie mit dem gleichen Werkzeug 50 erfolgt, kann eine sehr genaue Bearbeitung durchgeführt werden, um letztendlich die gewünschte Struktur zu erzielen. D.h., es wird ein Zahnersatz erstellt, der hinsichtlich seiner endgültigen Form höchsten Anforderungen entspricht und gleichzeitig in vorteilhafter Weise aus zwei unterschiedlichen Materialien, einem Material für das Gerüst und einem Verblendmaterial, besteht.

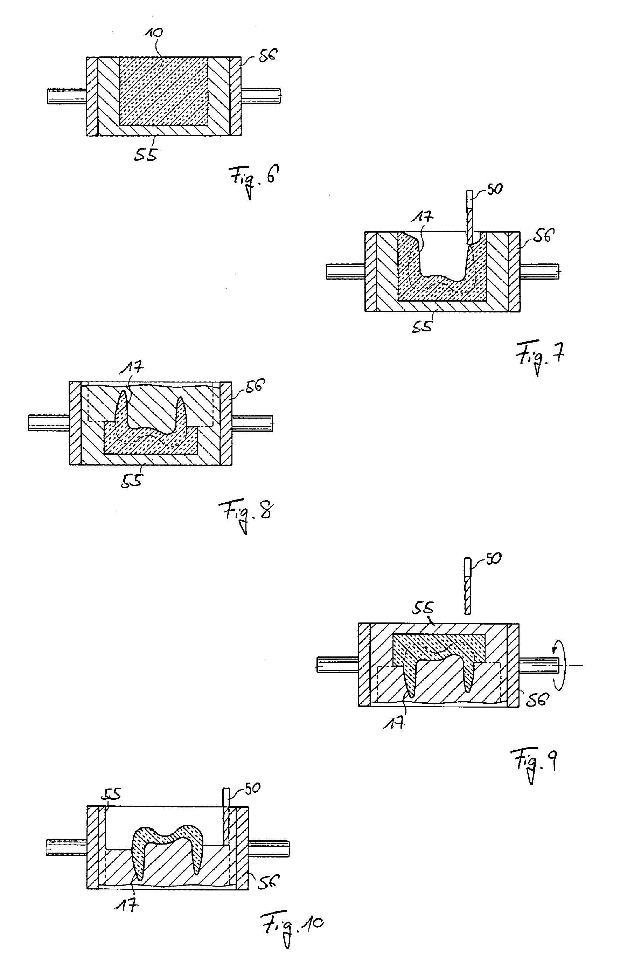

In gleicher Weise könnte auch das aus der bereits zuvor erwähnten WO 00/62705 bekannte Verfahren zum Herstellen von Zahnersatzteilen im sogenannten Umbettverfahren adaptiert werden. Die ersten Schritte des Verfahrens, die in den Figuren 6 bis 10 dargestellt sind, entsprechen dabei der ursprünglichen Vorgehensweise. D.h., aus dem mit Hilfe eines Einbettmaterials 55, beispielsweise Wachs, in eine Werkstückaufnahme 56 eingebetteten Materialblocks 10, z.B. einem sog. Keramikgrünling, wird zunächst aus dem Block 10 die Kroneninnenseite bzw. Kavität des Zahnersatzteils heraus gefräst, wobei im vorliegenden Fall nunmehr die aus dem Materialblock 10 herausgefräste Form der Gerüststruktur 17 entspricht. Nachdem auch die Außenfläche des Gerüsts 17 ausgearbeitet wurde, wird - wie in Figur 8 dargestellt - die Unterseite des Werkstücks wieder in das Einbettmaterial 55 eingebettet. Nach Drehung der Halterung erfolgt dann das Herausarbeiten der Oberseite der Gerüststruktur, bis sich die in Figur 10 dargestellte Form des Gerüsts 17 ergibt.

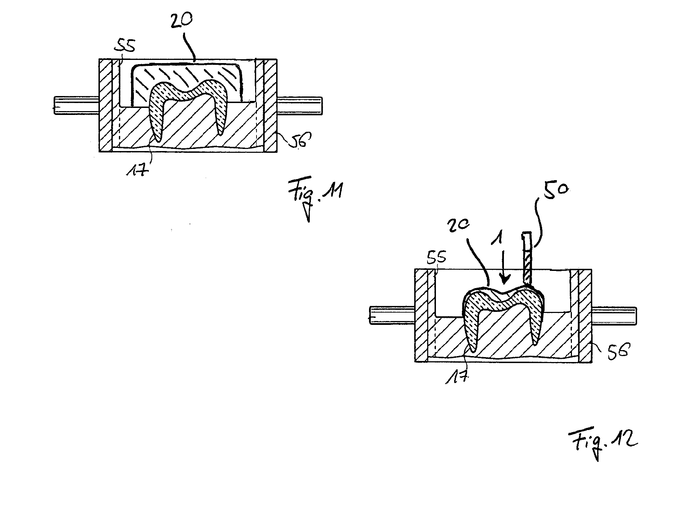

Die Oberseite des Gerüsts 17 wird dann mit dem Verblendmaterial 20 überdeckt (Figur 11) und dieses wiederum abhebend bearbeitet, so dass sich letztendlich die in Figur 12 dargestellte endgültige Form des Zahnersatzteils 1 ergibt, welche aus dem Gerüst 17 und dem Verblendmaterial 20 besteht. Sollte auch vorgesehen sein, dass das Verblendmaterial 20 im unteren Bereich der Gerüststruktur aufgebracht werden muss, so kann wiederum der obere Bereich des Zahnersatzteils 1 eingebettet, die Werkzeugaufnahme gedreht und nach entsprechendem Entfernen des Einbettmaterials Verblendmaterial aufgebracht werden, welches dann abschließend bis zur endgültigen Struktur bearbeitet bzw. entfernt wird. Auch in diesem Fall kann also eine homogene Verbindung zwischen Gerüst 17 und Verblendmaterial 20 erzielt werden, wobei die hier beschriebene Vorgehensweise aufgrund des mehrmaligen erneuten Einbettens eines Teils des Werkstücks mit einem höheren Aufwand verbunden ist.

Grundsätzlich ist zu dem erfindungsgemäßen Verfahren noch anzumerken, dass bei geringen Platzverhältnissen durch das erfindungsgemäße Verfahren die vorgeschriebenen Parameter von Gerüststärke und Verblendung sowie eine verbesserte Ästhetik eingehalten werden können. Außerdem ist das Fertigen zweier oder mehrerer Datensätze in einem CAM-Fertigungsprozess mit zwei gleichen oder unterschiedlichen Materialien möglich. Ein weiterer Vorteil bei der erfindungsgemäßen Technik ist, dass die Arbeiten rein CAD gesteuert von unterschiedlichen Softwareversionen mit unterschiedlichen Scanverfahren hergestellt werden können. So können in diesem Verfahren Käppchen, Gerüste, Abutments und weitere dentale Strukturen hergestellt werden.

## Patentansprüche

1. Verfahren zur Herstellung eines Zahnersatzteils (1), welches aus einer Gerüststruktur (15, 16, 17) und einem zumindest auf Teilbereichen der Gerüststruktur (15, 16, 17) befindlichen Verblendwerkstoff (20) besteht, wobei in einem ersten Schritt die Gerüststruktur (15, 16, 17) gefertigt wird,
**dadurch gekennzeichnet,**
**dass** die gefertigte Gerüststruktur (15, 16, 17) mit dem Verblendwerkstoff (20) aufgefüllt oder zumindest teilweise überdeckt wird und anschließend der Verblendwerkstoff (20) entsprechend bearbeitet wird, wobei die Bearbeitung auf der gleichen Positionierung der Gerüststruktur (15, 16, 17) erfolgt.

2. Verfahren nach Anspruch 1,
**dadurch gekennzeichnet,**
**dass** die Gerüststruktur (15, 16, 17) mit einem Opaker abgedeckt wird, bevor der Verblendwerkstoff (20) aufgefüllt wird.

3. Verfahren nach Anspruch 1 oder 2,
**dadurch gekennzeichnet,**
**dass** die Gerüststruktur (15, 16, 17) durch abtragendes Bearbeiten eines Materialblocks (10), insbesondere durch Fräsen und/oder Schleifen eines Keramikblocks, eines vorgesinterten Keramikblocks oder eines Keramikgrünlings erhalten wird.

4. Verfahren nach Anspruch 3,
**dadurch gekennzeichnet,**
**dass** das Bearbeiten des Materialblocks (10) mit Hilfe einer Fräsmaschine (51) erfolgt, wobei auch der Verblendwerkstoff (20) mit Hilfe der Fräsmaschine (51) bearbeitet wird.

5. Verfahren nach einem der vorherigen Ansprüche,
**dadurch gekennzeichnet,**
**dass** der Verblendwerkstoff (20) lediglich im Bereich der Okklusalfläche des Zahnersatzteils (1) aufgebracht wird.

6. Verfahren nach einem der vorherigen Ansprüche,
**dadurch gekennzeichnet,**
**dass** der Materialblock (10) während der Bearbeitung mittels eines Einbettmaterials (55) in einer Werkzeughalterung (56) gehalten wird, wobei der später aufgetragene Verblendwerkstoff (20) zumindest teilweise auch der Halterung des Materialblocks dient.
